# EUROPEAN PATENT APPLICATION

(11) **EP 2 782 239 A1**
(43) Date of publication of application: **24.09.2014**
(21) Application number: 13275073.8
(22) Date of filing: 21.03.2013
(51) Int. Cl.: H02M 7/49

(54) **Power electronic converter**

(71) Applicant: Alstom Technology Ltd, 5400 Baden (CH)
(72) Inventor: Trainer, David Reginald, Derby DE24 0AQ (GB)
(74) Representative: Potter Clarkson LLP

(57) **Abstract**

A power electronic converter (30), for connecting AC and DC electrical networks (46,44) and transferring power therebetween, comprises:
first and second DC terminals (32,34) for connection to a DC electrical network (44);
a converter limb (36) extending between the first and second DC terminals (32,34) and having first and second limb portions (38,40) separated by an AC terminal (42) for connection to an AC electrical network (46), each limb portion (38,40) including a chain-link converter (50), each chain-link converter (50) including at least one rationalised module (52), each rationalised module (52) having first and second sets of series-connected current flow control elements (54) connected in parallel with at least one energy storage device (56), each set of current flow control elements (54) including a primary active switching element to selectively direct current through the or each energy storage device (56) and a primary passive current check element to limit current flow through the rationalised module (52) to a single direction, the current flow control elements (54) and the or each energy storage device (56) in each rationalised module (52) combining to selectively provide a voltage source to control the configuration of an AC voltage at the AC terminal (42); and
a controller (60) to selectively control the switching of the current flow control elements (54) in the or each rationalised module (52) of each chain-link converter (50) to simultaneously switch both limb portions (38,40) into circuit to form a current circulation path (68) including the converter limb (36) and the DC electrical network (44).

## Description

This invention relates to a power electronic converter and an AC to AC converter assembly.

In power transmission networks alternating current (AC) power is typically converted to direct current (DC) power for transmission via overhead lines and/or undersea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC to DC power is also utilized in power transmission networks where it is necessary to interconnect AC networks operating at different frequencies. In any such power transmission network, converters are required at each interface between AC and DC power to effect the required conversion, and one such form of converter is a voltage source converter (VSC).

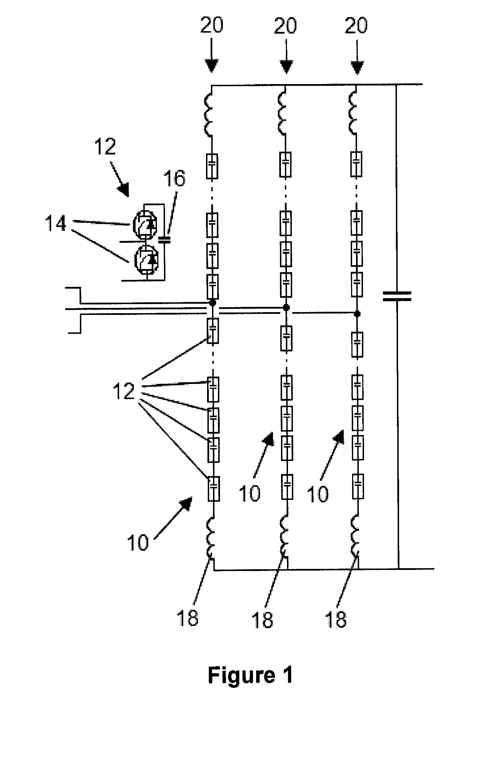

A known voltage source converter is shown in Figure 1 and includes a multilevel converter arrangement. The multilevel converter arrangement includes respective converter bridges 10 of series-connected converter cells 12. Each converter cell 12 includes a pair of series-connected insulated gate bipolar transistors (IGBTs) 14 connected in parallel with a capacitor 16. The individual converter cells 12 are not switched simultaneously and the converter voltage steps are comparatively small, and so such an arrangement eliminates the problems associated with the direct switching of the series-connected IGBTs 14.

The capacitor 16 of each converter cell 12 is configured to have a sufficiently high capacitive value in order to constrain the voltage variation at the capacitor terminals in such a multilevel converter arrangement. A DC side reactor 18 is also required in each converter bridge 10 to limit transient current flow between converter limbs 20, and thereby enable the parallel connection and operation of the converter limbs 20.

According to a first aspect of the invention, there is provided a power electronic converter, for connecting AC and DC electrical networks and transferring power therebetween, comprising:
first and second DC terminals for connection to a DC electrical network;
a converter limb extending between the first and second DC terminals and having first and second limb portions separated by an AC terminal for connection to an AC electrical network, each limb portion including a chain-link converter, each chain-link converter including at least one rationalised module, each rationalised module having first and second sets of series-connected current flow control elements connected in parallel with at least one energy storage device, each set of current flow control elements including a primary active switching element to selectively direct current through the or each energy storage device and a primary passive current check element to limit current flow through the rationalised module to a single direction, the current flow control elements and the or each energy storage device in each rationalised module combining to selectively provide a voltage source to control the configuration of an AC voltage at the AC terminal; and
a controller to selectively control the switching of the current flow control elements in the or each rationalised module of each chain-link converter to simultaneously switch both limb portions into circuit to form a current circulation path including the converter limb and the DC electrical network.

In use, the controller may selectively control the switching of the current flow control elements in the or each rationalised module of each chain-link converter to control the configuration of the AC voltage at the AC terminal in order to transfer power between the AC and DC electrical networks. The current circulation path may be intermittently formed during the operation of the power electronic converter to transfer power between the AC and DC electrical networks, without significantly affecting the overall power transfer between the AC and DC electrical networks.

The formation of the current circulation path permits flow of a circulation current between the converter limb and the DC electrical network. In use, the circulation current may be employed to modify the power characteristics of the power electronic converter and/or the DC electrical network. This advantageously obviates the need for separate hardware to modify the power characteristics of the power electronic converter and/or the DC electrical network, thus providing savings in terms of size, weight and cost of the power electronic converter.

A circulation current flowing in the current circulation path may include a DC current component to transfer energy from at least one rationalised module to the DC electrical network. This provides a reliable means of regulating the voltage level or range of the or each energy storage device in the or each rationalised module of each chain-link converter. This in turn permits balancing of the individual voltage levels of the energy storage devices of the chain-link converters to simplify the control of the switching of the current flow control elements in each rationalised module by allowing, for example, the use of average voltage value as feedback to control the switching of the current flow control elements in each rationalised module.

A circulation current flowing in the current circulation path may include an AC current component. The AC current component may, for example, be shaped to minimise or cancel a ripple current in the DC electrical network. This allows the power electronic converter to act as an active DC filter.

In embodiments of the invention, each limb portion may further include an inductor connected in series with the secondary passive current check element and chain-link converter, and the controller may selectively control the switching of the current flow control elements in the or each rationalised module of each chain-link converter to provide a voltage across the corresponding inductor to actively control the current in the respective limb portion. The inclusion of a series-connected inductor in each limb portion provides each limb portion with a current control element to enable more accurate control over the limb portion current and circulation current.

According to a second aspect of the invention, there is provided a power electronic converter, for connecting AC and DC electrical networks and transferring power therebetween, comprising:
first and second DC terminals for connection to a DC electrical network;
a converter limb extending between the first and second DC terminals and having first and second limb portions separated by an AC terminal for connection to an AC electrical network, each limb portion including a chain-link converter, each chain-link converter including at least one rationalised module, each rationalised module having first and second sets of series-connected current flow control elements connected in parallel with at least one energy storage device, each set of current flow control elements including a primary active switching element to selectively direct current through the or each energy storage device and a primary passive current check element to limit current flow through the rationalised module to a single direction, the current flow control elements and the or each energy storage device in each rationalised module combining to selectively provide a voltage source to control the configuration of an AC voltage at the AC terminal; and
a controller to selectively control the switching of the current flow control elements in the or each rationalised module of each chain-link converter such that each chain-link converter controls the configuration of the AC voltage at the AC terminal in a voltage range extending between a negative value and a positive value,
wherein each chain-link converter is rated so that the current flow control elements in the or each rationalised module of each chain-link converter are switchable to provide a voltage across the respective limb portion exceeding a DC voltage at the corresponding DC terminal.

The arrangement of each chain-link converter in this manner enables the respective limb portion to control the configuration of the AC voltage at the AC terminal in a voltage range extending between a negative value and a positive value, thus providing the power electronic converter with additional power transfer functionality.

The controller may selectively control the switching of the current flow control elements in the or each rationalised module of each chain-link converter to generate a leading or lagging AC current at the AC terminal. The generation of a leading or lagging AC current at the AC terminal is facilitated by the arrangement of each chain-link converter in the manner set out above which enables each limb portion to control the configuration of the AC voltage at the AC terminal in a voltage range extending between a negative value and a positive value. This in turn enables the power electronic converter to exchange reactive power with the AC electrical network, thus resulting in a power electronic converter with increased power transfer functionality.

Preferably the first and second sets of current flow control elements are connected in parallel with an energy storage device in a full-bridge arrangement to form a 2-quadrant bipolar module that can provide negative, zero or positive voltage while conducting current in a single direction.

In embodiments of the invention, each limb portion may further include a director switch, the director switch including at least one secondary passive current check element to limit current flow through the limb portion to a single direction between the corresponding AC and DC terminals, the or each secondary passive current check element in each limb portion being connected in series with the or each corresponding rationalised module.

In further embodiments of the invention, each limb portion may further include a director switch, the director switch including at least one secondary active switching element to selectively switch the corresponding limb portion into and out of circuit between the corresponding AC and DC terminals, the or each secondary active switching element in each limb portion being connected in series with the or each corresponding rationalised module.

During operation of the power electronic converter to transfer power between the AC and DC electrical networks, the flow of current in the power electronic converter alternates between the limb portions over a duty cycle. As such, when one of the limb portions is configured to conduct current between the AC terminal and corresponding DC terminal (i.e. is in a conducting state), the other of the limb portions is configured to be switched out of circuit (i.e. is in a non-conducting state).

The limb portion in the non-conducting state experiences a differential voltage thereacross, the differential voltage being the difference between the voltages at the AC terminal and corresponding DC terminal. The differential voltage experienced by the limb portion in the non-conducting state may be shared between the director switch and chain-link converter. In other words, each director switch may support part of a differential voltage appearing across the corresponding limb portion when that limb portion is in a non-conducting state. This means that the chain-link converter in each limb portion would not be required to be capable of blocking the entire differential voltage, since the director switch can be used to block part of the differential voltage, thus permitting a reduction in voltage rating of each chain-link converter.

In contrast, during operation of the known voltage source converter shown in Figure 1, the series-connected converter cells 12 are required to be capable of blocking the entire differential voltage experienced by the corresponding converter bridge 10, thus requiring the series-connected converter cells to have a relatively higher combined voltage rating for a given set of AC and DC voltages of the AC and DC electrical networks.

The series connection of the director switch and chain-link converter in each limb portion therefore reduces considerably the required number of rationalised modules in each chain-link converter required to carry out transfer of power between the AC and DC electrical networks.

The series-connection of the director switch and chain-link converter in each limb portion means that the director switch dictate which limb portion is in conduction and thereby is in use to control the configuration of the AC voltage at the AC terminal.

When each director switch includes at least one secondary passive current check element, the inclusion of the or each secondary passive current check element in each limb portion restricts the limb portion current to a single direction and is thus compatible with the unidirectional nature of the or each rationalised module of the corresponding chain-link converter. This means that each limb portion does not require a secondary active switching element connected in series with the chain-link converter to dictate which limb portion is in conduction. This results in a more cost-efficient and reliable power electronic converter, since passive current check elements (e.g. diodes) are lighter, smaller, and simpler than active switching elements.

The arrangement of the power electronic converter according to the invention results in a small, lightweight, inexpensive, efficient and reliable means of connecting AC and DC electrical networks and transferring power therebetween.

In embodiments of the first aspect of the invention employing the use of limb portions including a director switch including at least one secondary passive current check element, each chain-link converter must be configured to provide a voltage to forward-bias the or each secondary passive current check element to enable simultaneous switching of both limb portions into circuit, and so the voltage rating of each chain-link converter is set accordingly to enable each chain-link converter to provide such a voltage.

In embodiments of the invention, the controller may selectively control the switching of the current flow control elements of at least one rationalised module in at least one of the chain-link converters to provide a voltage which opposes a flow of current created by a fault occurring in the DC electrical network.

The ability to operate the power electronic converter in this manner results in a power electronic converter with in-built current limiting capability and thereby obviates the need for separate current limiting hardware to limit a flow of current created by a fault occurring in the DC electrical network, thus providing savings in terms of size, weight and cost of the power electronic converter.

The power electronic converter according to the invention may include a plurality of converter limbs, wherein the AC terminal of each converter limb is connectable to a respective phase of a multi-phase AC electrical network.

According to a third aspect of the invention, there is provided an AC to AC converter assembly comprising
a rectifier comprising:
   first and second DC terminals;
   a converter limb extending between the first and second DC terminals and having first and second limb portions separated by an AC terminal for connection to an AC electrical network, each limb portion including a chain-link converter, each chain-link converter including at least one rationalised module, each rationalised module having first and second sets of series-connected current flow control elements connected in parallel with at least one energy storage device, each set of current flow control elements including a primary active switching element to selectively direct current through the or each energy storage device and a primary passive current check element to limit current flow through the rationalised module to a single direction, the current flow control elements and the or each energy storage device in each rationalised module combining to selectively provide a voltage source to control the configuration of an AC voltage at the AC terminal; and
an inverter comprising:
   first and second DC terminals; and
   a converter limb extending between the first and second DC terminals and having first and second limb portions separated by an AC terminal for connection to an AC electrical network, each limb portion including a chain-link converter, each chain-link converter including at least one rationalised module, each rationalised module having first and second sets of series-connected current flow control elements connected in parallel with at least one energy storage device, each set of current flow control elements including a primary active switching element to selectively direct current through the or each energy storage device and a primary passive current check element to limit current flow through the rationalised module to a single direction, the current flow control elements and the or each energy storage device in each rationalised module combining to selectively provide a voltage source to control the configuration of an AC voltage at the AC terminal,
wherein the first DC terminals of the rectifier and inverter are interconnected via a first link, and the second DC terminals of the rectifier and inverter are interconnected via a second link.

The AC to AC converter assembly according to the invention is not only suitable for connection to a sending end of a DC power transmission scheme, but is also suitable for use in applications such as off-shore wind generation.

Each of the rectifier and inverter may include a plurality of converter limbs.

The rectifier may be a power electronic converter according to any embodiment of the first and second aspects of the invention.

The inverter may be a power electronic converter according to any embodiment of the first and second aspects of the invention.

When each limb portion of the inverter includes a director switch, the series connection of the director switch and chain-link converter in each limb portion of the inverter means that the differential voltage experienced by the limb portion in the non-conducting state is shared between the director switch and chain-link converter, thus reducing considerably the required number of modules in each chain-link converter required to carry out transfer of power between the rectifier and the receiving AC electrical network.

The arrangement of the AC to AC converter assembly according to the invention results in a small, lightweight, inexpensive, efficient and reliable means of connecting separate AC electrical networks and transferring power therebetween.

Preferred embodiments of the invention will now be described, by way of non-limiting examples only, with reference to the accompanying drawings in which:
Figure 1 shows, in schematic form, a prior art power electronic converter;
Figure 2 shows, in schematic form, a power electronic converter according to a first embodiment of the invention;
Figure 3 shows, in schematic form, the structure of a rationalised module forming part of the power electronic converter of Figure 2;
Figure 4a shows, in schematic form, the operation of a converter limb of the power electronic converter of Figure 2 in an AC to DC power transfer mode;
Figure 4b shows, in schematic form, the operation of the power electronic converter of Figure 2 to form a current circulation path;
Figure 4c illustrates, in graph form, a circulation current flowing in a circulation path formed in the power electronic converter of Figure 2;
Figure 4d shows, in schematic form, the configuration of the power electronic converter of Figure 2 to oppose a flow of current created by a fault occurring in a DC electrical network;
Figure 5a shows, in schematic form, a power electronic converter according to a second embodiment of the invention;
Figure 5b illustrates, in graph form, a circulation current flowing in a circulation path formed in the power electronic converter of Figure 5a;
Figure 6 illustrates, in graph form, the operation of a power electronic converter according to a third embodiment of the invention to exchange reactive power with an AC electrical network; and
Figure 7 shows, in schematic form, an AC to AC converter assembly according to a fourth embodiment of the invention.

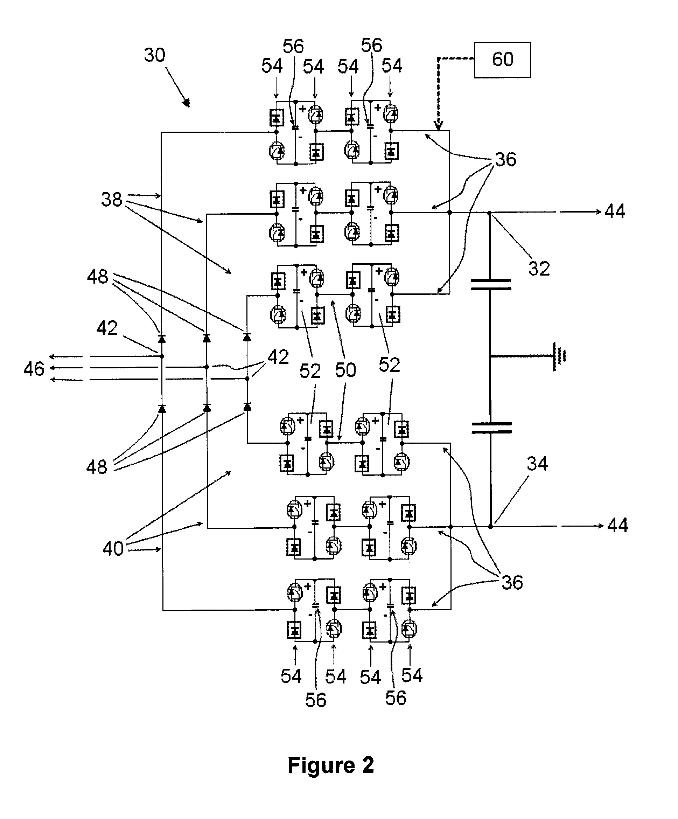

A first power electronic converter 30 according to a first embodiment of the invention is shown in Figure 2.

The first power electronic converter 30 includes first and second DC terminals 32,34 and a plurality of converter limbs 36. Each converter limb 36 extends between the first and second DC terminals 32,34 and has first and second limb portions 38,40 separated by an AC terminal 42.

In use, the first and second DC terminals 32,34 of the first power electronic converter 30 are respectively connected to first and second terminals of a DC electrical network 44, and the AC terminal 42 of each converter limb 36 is connected to a respective phase of a multi-phase AC electrical network 46.

Each of the first and second limb portions 38,40 includes a director switch, which includes a secondary passive current check element 48, connected in series with a chain-link converter 50.

Each secondary passive current check element 48 is in the form of a diode. The secondary passive current check element 48 in the first limb portion 38 is arranged so that current flowing in the first limb portion 38 can only flow from the AC terminal 42 to the first DC terminal 32. The secondary passive current check element 48 in the second limb portion 40 is arranged so that current flowing in the second limb portion 40 can only flow from the second DC terminal 34 to the AC terminal 42.

It is envisaged that, in other embodiments of the invention, the secondary passive current check element 48 may be replaced by a plurality of series-connected secondary passive current check elements.

Each chain-link converter 50 includes a plurality of series-connected rationalised modules 52.

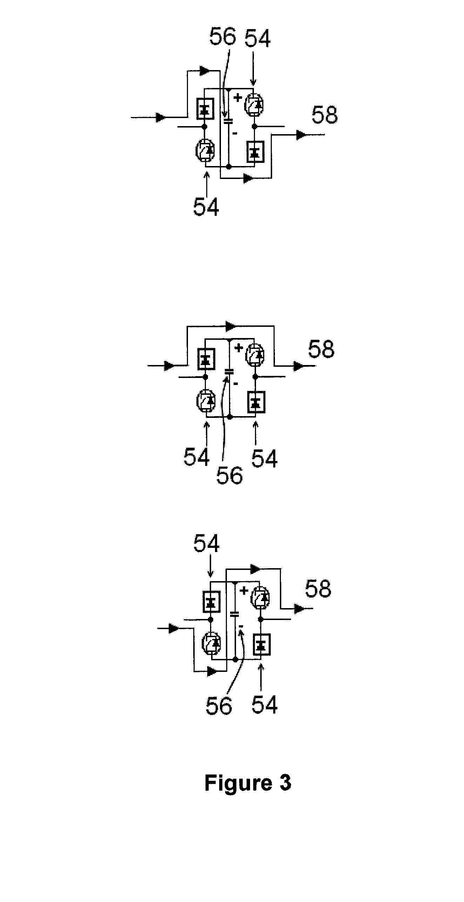

Figure 3 shows, in schematic form, the structure of each rationalised module 52.

Each rationalised module 52 has first and second sets of series-connected current flow control elements 54 and an energy storage device in the form of a capacitor 56. The first and second sets of series-connected current flow control elements 54 are connected in parallel with the capacitor 56 in a full-bridge arrangement. Each set of current flow control elements 54 includes a primary active switching element connected in series with a primary passive current check element.

Each primary active switching element is constituted by a semiconductor device in the form of an Insulated Gate Bipolar Transistor (IGBT) which is connected in parallel with an anti-parallel diode. It is envisaged that each primary active switching element may be replaced by a different active switching element. For example, in other embodiments of the invention, each IGBT may be replaced by a gate turn-off thyristor, a field effect transistor, an injection-enhanced gate transistor, an integrated gate commutated thyristor or any other self-commutated semiconductor device.

Each primary passive current check element is in the form of a diode.

The capacitor 56 of each rationalised module 52 is selectively bypassed or inserted into the corresponding chain-link converter 50 by changing the states of the current flow control elements 54. This selectively directs current 58 through the capacitor 56 or causes current 58 to bypass the capacitor 56, so that the rationalised module 52 provides a negative, zero or positive voltage.

The capacitor 56 of the rationalised module 52 is bypassed when the current flow control elements 54 in the rationalised module 52 are configured to form a short circuit in the rationalised module 52. This causes current 58 in the corresponding chain-link converter 50 to pass through the short circuit and bypass the capacitor 56, and so the rationalised module 52 provides a zero voltage, i.e. the rationalised module 52 is configured in a bypassed mode.

The capacitor 56 of the rationalised module 52 is inserted into the corresponding chain-link converter 50 when the current flow control elements 54 in the rationalised module 52 are configured to allow the current 58 in the corresponding chain-link converter 50 to flow into and out of the capacitor 56. The capacitor 56 then charges or discharges its stored energy so as to provide a non-zero voltage, i.e. the rationalised module 52 is configured in a non-bypassed mode. The full-bridge arrangement of the rationalised module 52 permits configuration of the current flow control elements 54 in the rationalised module 52 to cause current 58 to flow into and out of the capacitor 56 in either direction, and so the rationalised module 52 can be configured to provide a negative or positive voltage in the non-bypassed mode.

Meanwhile the series connection of the primary passive current check element and primary active switching element of each set of current flow control elements 54 in the rationalised module 52 limits the flow of current 58 through the rationalised module 52 to a single direction. As such each rationalised module 52 is arranged such that current flowing in the first limb portion 38 can only flow from the AC terminal 42 to the first DC terminal 32, and current flowing in the second limb portion 40 can only flow from the second DC terminal 34 to the AC terminal 42.

In this manner the first and second sets of series-connected current flow control elements 54 are connected in parallel with the capacitor 56 in a full-bridge arrangement to define a 2-quadrant bipolar module that can provide negative, zero or positive voltage while conducting current in a single direction.

It is possible to build up a combined voltage across each chain-link converter 50, which is higher than the voltage available from each of its individual rationalised modules 52, via the insertion of the capacitors 56 of multiple rationalised modules 52, each providing its own voltage, into each chain-link converter 50. In this manner switching of the current flow control elements 54 in each rationalised module 52 causes each chain-link converter 50 to provide a stepped variable voltage source, which permits the generation of a voltage waveform across each chain-link converter 50 using a step-wise approximation.

It is envisaged that, in other embodiments of the invention, the capacitor 56 in each rationalised module 52 may be replaced by another type of energy storage device which is capable of storing and releasing energy, e.g. a battery or a fuel cell.

The first power electronic converter 30 further includes a controller 60 to selectively control the switching of the current flow control elements 54 in each rationalised module 52 of each chain-link converter 50.

For the purposes of this specification, the operation of the first power electronic converter 30 is described with reference to one of its converter limbs 36. It will be appreciated that the described operation of one of the converter limbs 36 of the first power electronic converter 30 applies mutatis mutandis to the operation of the other two converter limbs 36.

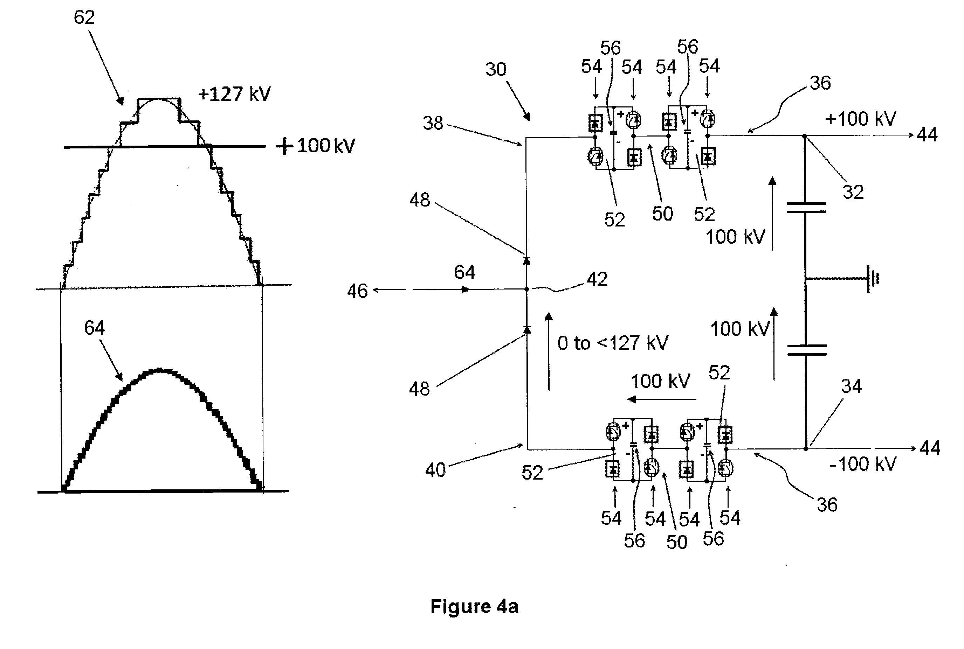

As shown in Figure 4a, the first terminal of the DC electrical network 44 carries a DC voltage of +100 kV and the second terminal of the DC electrical network 44 carries a DC voltage of -100kV, and the AC voltage of the AC electrical network 46 varies between - 127 kV and + 127 kV.

The chain-link converter 50 in each limb portion 38,40 is rated to be capable of providing a voltage of 100.1 kV thereacross. This enables the chain-link converter 50 in the first limb portion 38 to control the configuration of the AC voltage at the AC terminal 42 in a voltage range extending between 0 kV to 127 kV, and enables the chain-link converter 50 in the second limb portion 40 to control the configuration of the AC voltage at the AC terminal 42 in a voltage range extending between 0 kV to -127 kV.

The secondary passive current check elements 48 in the first and second limb portions 38,40 dictate which limb portion is in conduction and thereby is in use to control the configuration of the AC voltage at the AC terminal 42. The configuration of the AC voltage at the AC terminal 42 is controlled by combining first and second AC voltage components 62 as follows.

To construct the first AC voltage component 62, the first limb portion 38 is in a conducting state by way of its secondary passive current check element 48 being forward-biased, and the controller 60 controls the switching of the current flow control elements 54 of each rationalised module 52 in the first limb portion 38 to add and subtract voltage steps to, i.e. "push up" and "pull down", the voltage of +100kV at the first DC terminal 32. The first AC voltage component 62 is constructed to be in the form of a positive, half-sinusoidal voltage waveform with a peak value of +127 kV while a positive AC current 64 flows into the AC terminal 42.

Meanwhile the second limb portion 40 is in a non-conducting state by way of its secondary passive current check element 48 being reverse-biased, and thus experiences a differential voltage thereacross, the differential voltage being the difference between the voltages at the AC terminal 42 and second DC terminal 34. Thus, the differential voltage experienced by the second limb portion 40 in the non-conducting state varies between 100 kV and 227 kV, and is shared between the secondary passive current check element 48, which is rated to block a voltage ranging from 0 to 127 kV, and the chain-link converter 50, which is configured to block a voltage of 100 kV.

To construct the second AC voltage component, the second limb portion 40 is in a conducting state by way of its secondary passive current check element 48 being forward-biased, and the controller 60 controls the switching of the current flow control elements 54 of each rationalised module 52 in the second limb portion 40 to add and subtract voltage steps to, i.e. "push up" and "pull down", the voltage of -100kV at the second DC terminal 34. The second AC voltage component is constructed to be in the form of a negative, half-sinusoidal voltage waveform with a peak value of -127 kV while a negative AC current flows into the AC terminal 42.

Meanwhile the first limb portion 38 is in a non-conducting state by way of its secondary passive current check element 48 being reverse-biased, and thus experiences a differential voltage thereacross, the differential voltage being the difference between the voltages at the AC terminal 42 and first DC terminal 32. Thus, the differential voltage experienced by the first limb portion 38 in the non-conducting state varies between 100 kV and 227 kV, and is shared between the secondary passive current check element 48, which is rated to block a voltage ranging from 0 to 127 kV, and the chain-link converter 50, which is configured to block a voltage of 100 kV.

The combination of the first and second AC voltage components 62 over a duty cycle results in the configuration, at the AC terminal 42, of a sinusoidal AC voltage with peak values of +127 kV and -127 kV. In this manner the first power electronic converter 30 controls the configuration of an AC voltage at the AC terminal 42 to transfer power from the AC electrical network 46 to the DC electrical network 44 in an AC to DC power transfer mode.

The construction, at the AC terminal 42, of the AC voltage with peak values which are 27% higher than the respective DC voltages at the first and second DC terminals 32,34 means that the product of the voltage provided by each chain-link converter 50 and the current flowing through each chain-link converter 50 gives a net zero energy exchange in each chain-link converter 50 over half of a duty cycle. In addition, the structure of the rationalised module 52 permits the unidirectional current flowing through the rationalised module 52 to flow in either forward or reverse directions through the capacitor 56. This in turn allows selective real-time charging and discharging, and thereby control of the voltage level, of the capacitor 56 in each rationalised module 52 whilst the power electronic converter is operated to transfer power from the AC electrical network 46 to the DC electrical network 44.

The series-connection of the secondary passive current check element 48 and chain-link converter 50 in each limb portion 38,40 obviates the need for each chain-link converter 50 to be capable of blocking the entire differential voltage, thus permitting a reduction in voltage rating of each chain-link converter 50. This therefore reduces considerably the required number of rationalised modules 52 in each chain-link converter 50 required to carry out transfer of power from the AC electrical network 46 to the DC electrical network 44.

The series-connection of the secondary passive current check element 48 and chain-link converter 50 in each limb portion 38,40 also means that each limb portion 38,40 does not require a primary active switching element connected in series with the chain-link converter 50 to dictate which limb portion is in conduction. This results in a more cost-efficient and reliable power electronic converter, since passive current check elements are lighter, smaller, and simpler than active switching elements.

The arrangement of the first power electronic converter 30 results in a small, lightweight, inexpensive, efficient and reliable means of connecting the AC and DC electrical networks 46,44 and transferring power from the AC electrical network 46 to the DC electrical network 44.

The increase in rating of each chain-link converter 50 to enable it to provide a voltage of 100.1 kV thereacross enables the chain-link converters 50 to be operated to each provide a voltage to forward-bias both secondary passive current check elements 48 and thereby enable simultaneous switching of both limb portions 38,40 into circuit.

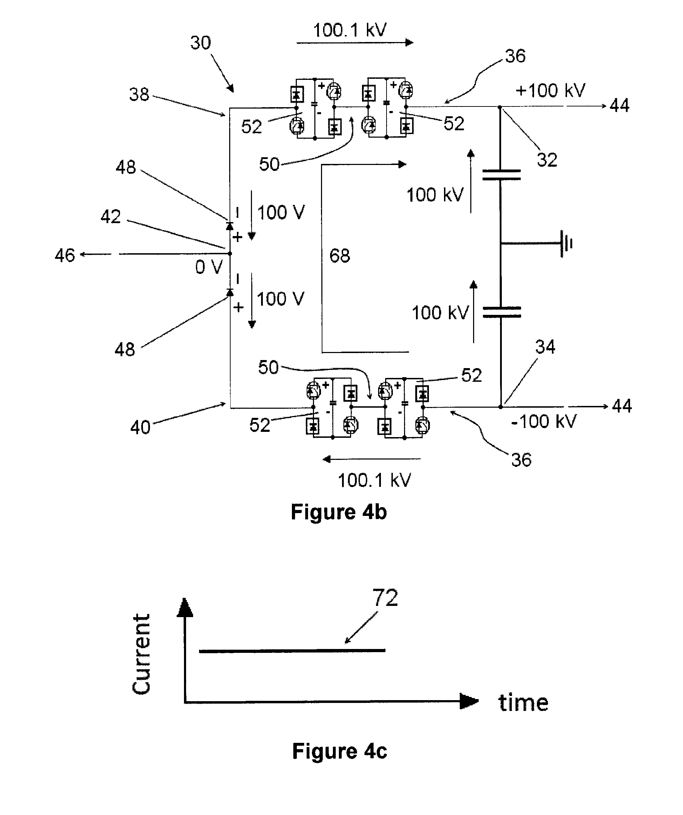

In use, when the AC voltage at the AC terminal 42 is at 0 kV, the controller 60 controls the switching of the current flow control elements 54 in each rationalised module 52 of each chain-link converter 50 to simultaneously switch both limb portions 38,40 into circuit to form a current circulation path 68 including the converter limb 36 and the DC electrical network 44, as shown in Figure 4b. In particular, the controller 60 controls the switching of the current flow control elements 54 in each rationalised module 52 of each chain-link converter 50 to provide a voltage of 100.1 kV across each chain-link converter 50 to oppose the voltage across the first and second DC terminals 32,34 such that a forward-biasing voltage of 100 V appears across the secondary passive current check element 48 in each limb portion 38,40.

The formation of the current circulation path 68 in this manner permits flow of a circulation current between the converter limb 36 and the DC electrical network 44, whereby the circulation current includes a DC current component 72, as shown in Figure 4c.

The inclusion of the DC current component 72 in the circulation current permits transfer of energy from at least one of the rationalised modules 52 to the DC electrical network 44. This provides a reliable means of regulating the voltage level of the capacitor 56 in each rationalised module 52 of each chain-link converter 50. This in turn permits balancing of the individual voltage levels of the capacitors 56 of the chain-link converters 50 to simplify the control of the switching of the current flow control elements 54 in each rationalised module 52 by allowing, for example, the use of average voltage value as feedback to control the switching of the current flow control elements 54 in each rationalised module 52.

The current circulation path 68 may be intermittently formed during the operation of the first power electronic converter 30 to transfer power between the AC and DC electrical networks 46,44, without significantly affecting the overall power transfer between the AC and DC electrical networks 46,44.

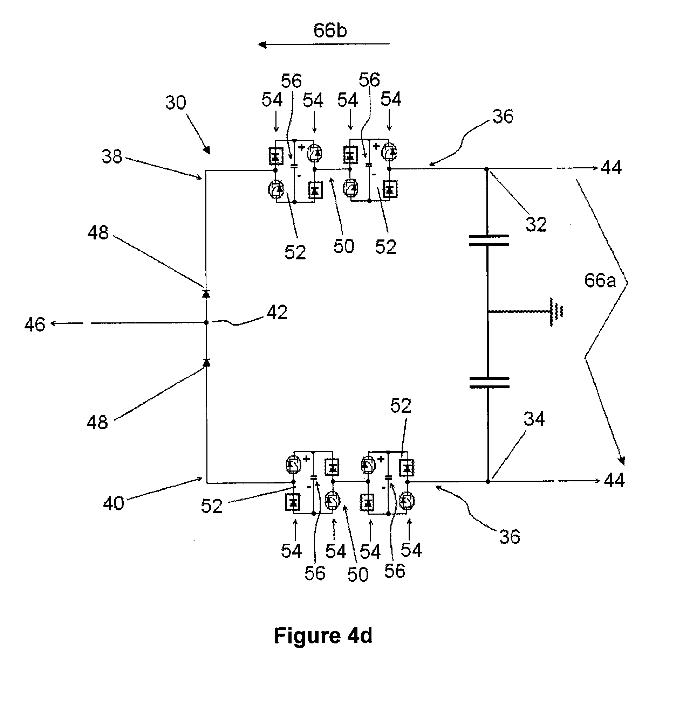

The arrangement of each rationalised module 52 further provides the first power electronic converter 30 with current limiting capability, which is described as follows with reference to Figure 4d.

A high fault current may be created by a fault 66a or other abnormal operating condition occurring in the DC electrical network 44. The AC voltage of the AC electrical network 46 drives the high fault current to flow in the power electronic converter and the DC electrical network 44.

In response to an event of high fault current in the DC electrical network 44, the controller 60 controls the switching of the current flow control elements 54 of at least one rationalised module 52 in at least one of the chain-link converters 50 to direct the fault current through its capacitor 56 such that the rationalised module 52 provides a voltage 66b which opposes the flow of the fault current.

The ability to operate the first power electronic converter 30 in this manner results in a power electronic converter with in-built current limiting capability and thereby obviates the need for separate current limiting hardware to limit a flow of current created by a fault occurring in the DC electrical network 44, thus providing savings in terms of size, weight and cost.

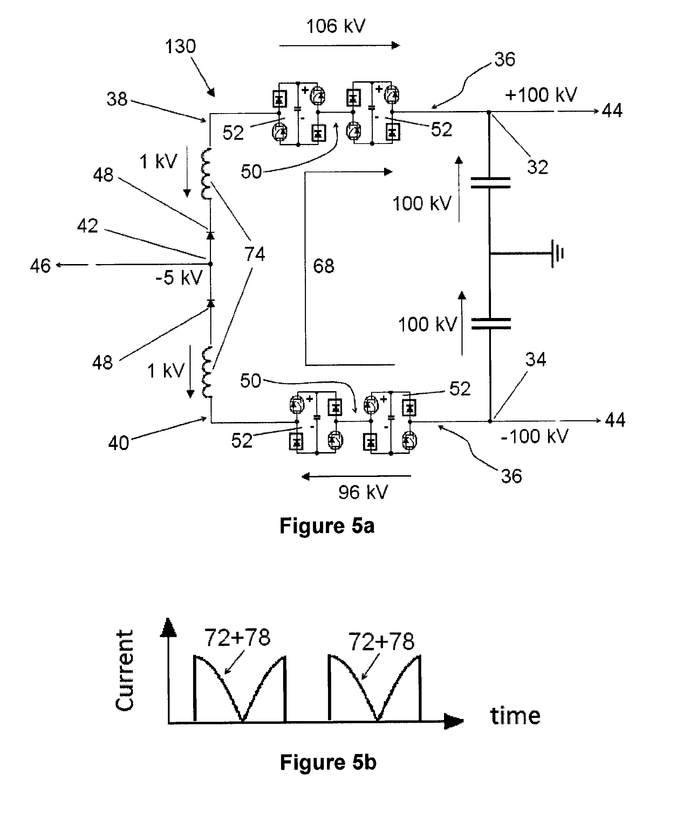

A second power electronic converter 130 according to a second embodiment of the invention is shown in Figure 5a. The structure and operation of the second power electronic converter 130 of Figure 5a is similar to the structure and operation of the first power electronic converter 30 of Figure 2, and like features share the same reference numerals.

The second power electronic converter 130 differs from the first power electronic converter 30 in that, in the second power electronic converter 130:
- each limb portion 38,40 further includes an inductor 74 connected in series with the secondary passive current check element 48 and chain-link converter 50;
- the chain-link converter 50 in each limb portion 38,40 is rated to be capable of providing a voltage of 106 kV thereacross, instead of a voltage of 100.1 kV thereacross.

In use, when the AC voltage at the AC terminal 42 is at -5 kV (i.e. near to 0 kV), the controller 60 controls the switching of the current flow control elements 54 in each rationalised module 52 of each chain-link converter 50 to simultaneously switch both limb portions 38,40 into circuit to form a current circulation path 68 including the converter limb 36 and the DC electrical network 44. In particular, the controller 60 controls the switching of the current flow control elements 54 in each rationalised module 52 of each chain-link converter 50 to provide a voltage of 106 kV across the chain-link converter 50 in the first limb portion 38 and a voltage of 96 kV across the chain-link converter 50 in the second limb portion 40 to oppose the voltage across the first and second DC terminals 32,34 such that that a voltage of 1 kV appears across the inductor 74 in each limb portion 38,40.

The formation of the current circulation path 68 in this manner permits flow of a circulation current between the converter limb 36 and the DC electrical network 44, whereby the circulation current includes a DC current component 72 and an AC current component 78, as shown in Figure 5b. The AC current component 78 may, for example, be shaped to minimise or cancel a ripple current in the DC electrical network 44. This allows the second power electronic converter 130 to act as an active DC filter.

The presence of a voltage across the inductor 74 in each limb portion 38,40 provides the second power electronic converter 130 with additional, active control over the circulation current. As such the inclusion of a series-connected inductor 74 in each limb portion 38,40 provides a current control element to enable more accurate control over the limb portion current and circulation current.

There is a third power electronic converter according to a third embodiment of the invention. The structure and operation of the third power electronic converter is similar to the structure and operation of the first power electronic converter 30 of Figure 2.

The third power electronic converter differs from the first power electronic converter 30 in that, in the third power electronic converter, each chain-link converter is rated so that the current flow control elements in each rationalised module of each chain-link converter are switchable to provide a voltage across the respective limb portion exceeding a DC voltage at the corresponding DC terminal 32,34 by 50 kV. In other words, each chain-link converter of the fifth power electronic converter is rated to be capable of providing a voltage across the respective limb portion significantly exceeding a DC voltage at the corresponding DC terminal 32,34 by 50 kV.

The arrangement of each chain-link converter in this manner enables the respective limb portion to control the configuration of the AC voltage at the AC terminal in a voltage range extending between a negative value of -50 kV and a positive value of +127 kV.

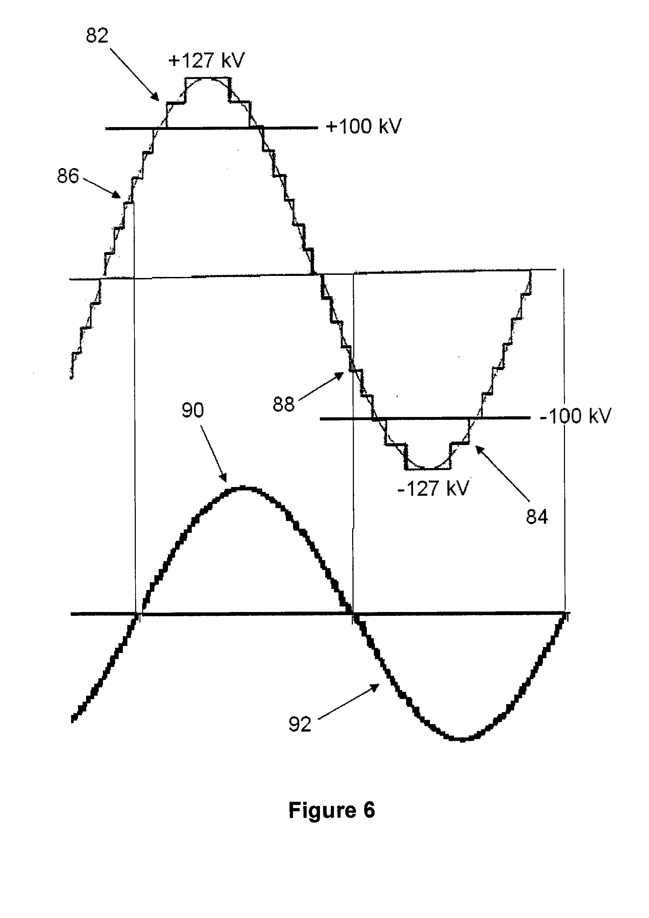

In use, the fifth power electronic converter is operable to exchange reactive power with the AC electrical network by controlling the configuration of the AC voltage at the AC terminal through combination of first and second AC voltage components 82,84, which is described as follows with reference to Figure 6.

To construct the first AC voltage component 82, the first limb portion is in a conducting state by way of its secondary passive current check element being forward-biased, and the controller controls the switching of the current flow control elements of each rationalised module in the first limb portion to add and subtract voltage steps to, i.e. "push up" and "pull down", the voltage of +100kV at the first DC terminal 32. The first AC voltage component 82 is constructed to be in the form of a partial sinusoidal voltage waveform which starts at a positive, first voltage value 86 of +50 kV, increases to a peak value of +127 kV and then decreases to a negative, second voltage value 88 of -50 kV while a positive AC current 90 flows into the AC terminal. Meanwhile the second limb portion is in a non-conducting state.

To construct the second AC voltage component 84, the second limb portion is in a conducting state by way of its secondary passive current check element being forward-biased, and the controller controls the switching of the current flow control elements of each rationalised module in the second limb portion to add and subtract voltage steps to, i.e. "push up" and "pull down", the voltage of -100kV at the second DC terminal 34. The second AC voltage component 84 is constructed to be in the form of a partial sinusoidal voltage waveform which starts at the negative, second voltage value 88 of -50 kV, decreases to a peak value of -127 kV and then increases to the positive, first voltage value 86 of +50 kV while a negative AC current 92 flows into the AC terminal. Meanwhile the first limb portion is in a non-conducting state.

The combination of the first and second AC voltage components 82,84 over a duty cycle not only results in the configuration, at the AC terminal, of a sinusoidal AC voltage with peak values of +127 kV and -127 kV, but also results in generation of a lagging AC current 90,92 at the AC terminal. In this manner the fifth power electronic converter controls the configuration of an AC voltage at the AC terminal to exchange reactive power with the AC electrical network in a reactive power exchange mode.

Likewise, to generate a leading AC current at the AC terminal, the first AC voltage component is constructed by the chain-link converter of the first limb portion to be in the form of a partial sinusoidal voltage waveform which starts at the negative, second voltage value of -50 kV, increases to a peak value of +127 kV and then decreases to a positive, first voltage value of +50 kV, and the second AC voltage component is constructed by the chain-link converter of the second limb portion be in the form of a partial sinusoidal voltage waveform which starts at the positive, first voltage value of +50 kV, decreases to a peak value of -127 kV and then increases to the negative, second voltage value of -50 kV.

The arrangement of each chain-link converter 50 in the manner set out above which enables each limb portion 38,40 to control the configuration of the AC voltage at the AC terminal in a voltage range extending between a negative value and a positive value therefore enables generation of a leading or lagging AC current at the AC terminal. This in turn enables the fifth power electronic converter to exchange reactive power with the AC electrical network, thus resulting in a power electronic converter with increased power transfer functionality.

It is envisaged that, in other embodiments of the invention, each limb portion may omit the director switch. In such embodiments, each chain-link converter may be configured to be capable of blocking the entire differential voltage when the corresponding limb portion in a non-conducting state.

It is also envisaged that, in other embodiments of the invention, the secondary passive current check element in each director switch may be replaced by at least one secondary active switching element to selectively switch the corresponding limb portion into and out of circuit between the corresponding AC and DC terminals, the or each secondary active switching element in each limb portion being connected in series with the or each corresponding rationalised module.

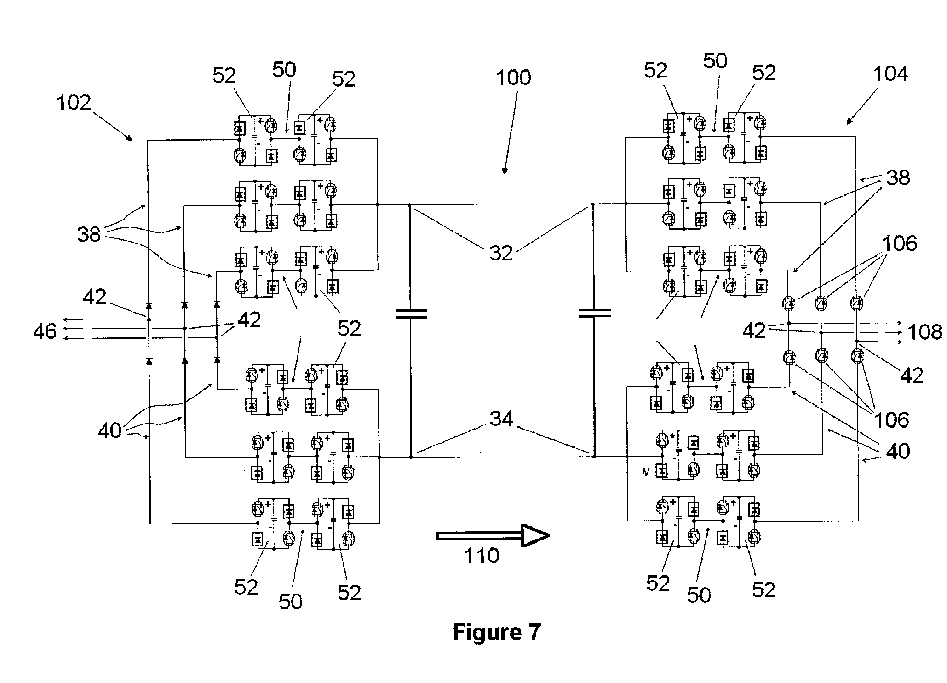

An AC to AC converter assembly 100 according to a fourth embodiment of the invention is shown in Figure 7.

The AC to AC converter assembly 100 comprises a rectifier 102 and an inverter 104.

The structure and operation of the rectifier 102 is identical to the structure and operation of the first power electronic converter 30 of Figure 2, and like features share the same reference numerals.

The structure and operation of the inverter 104 is similar to the structure and operation of the first power electronic converter 30 of Figure 2, and like features share the same reference numerals. The inverter 104 differs from the first power electronic converter 30 of Figure 2 in that, in the inverter 104:
- each limb portion 38,40 includes a director switch, which includes a primary active switching element 106, connected in series with the chain-link converter 50;
- each rationalised module 52 is arranged such that current flowing in the first limb portion 38 can only flow from the first DC terminal 32 to the AC terminal 42, and current flowing in the second limb portion 40 can only flow from the AC terminal 42 to the second DC terminal 34.

The first DC terminals 32 of the rectifier and inverter 102,104 are interconnected via a first link, and the second DC terminals 34 of the rectifier and inverter 102,104 are interconnected via a second link.

Each primary active switching element 106 in each limb portion 38,40 of the inverter 104 is constituted by a semiconductor device in the form of an Insulated Gate Bipolar Transistor (IGBT) which is connected in parallel with an anti-parallel diode. It is envisaged that each primary active switching element may be replaced by a different active switching element. For example, in other embodiments of the invention, each IGBT may be replaced by a gate turn-off thyristor, a field effect transistor, an injection-enhanced gate transistor, an integrated gate commutated thyristor or any other self-commutated semiconductor device.

The inverter 104 uses the series-connected primary active switching element 106 in each limb portion 38,40 to dictate which limb portion 38,40 is in conduction and thereby is in use to control the configuration of the AC voltage at each AC terminal 42 of the inverter. The series connection of the primary active switching element 106 and chain-link converter 50 in each limb portion 38,40 of the inverter 104 means that the differential voltage experienced by the limb portion 38,40 in the non-conducting state is shared between the primary active switching element 106 and chain-link converter 50, thus reducing considerably the required number of rationalised modules 52 in each chain-link converter 50 required to carry out transfer of power between the rectifier 102 and the receiving AC electrical network 46.

In use, the AC to AC converter assembly 100 is operable to transfer power 110 from a transmitting AC electrical network 46 connected to the AC terminals 42 of the rectifier 102 to a receiving AC electrical network 108 connected to the AC terminals 42 of the inverter 104.

The arrangement of the AC to AC converter assembly 100 of Figure 10 results in a small, lightweight, inexpensive, efficient and reliable means of connecting separate AC electrical networks 46,108 and transferring power therebetween. The AC to AC converter assembly 100 of Figure 10 is not only suitable for connection to a sending end of a DC power transmission scheme, but is also suitable for use in applications such as off-shore wind generation.

It is envisaged that, in other embodiments of the invention, the power electronic converter may include a different number of converter limbs, wherein the AC terminal of each converter limb is connectable to a respective phase of a multi-phase AC electrical network.

It is further envisaged that, in other embodiments of the invention, the power electronic converter may include a single converter limb, wherein the AC terminal is connectable to a single-phase AC electrical network.

It will be appreciated that the voltage values used in the embodiments shown are merely chosen to illustrate the operation of the respective embodiment of the power electronic converter, and thus may vary in practice depending on the power requirements of the associated power application.

## Claims

1. A power electronic converter, for connecting AC and DC electrical networks and transferring power therebetween, comprising:
first and second DC terminals for connection to a DC electrical network;
a converter limb extending between the first and second DC terminals and having first and second limb portions separated by an AC terminal for connection to an AC electrical network, each limb portion including a chain-link converter, each chain-link converter including at least one rationalised module, each rationalised module having first and second sets of series-connected current flow control elements connected in parallel with at least one energy storage device, each set of current flow control elements including a primary active switching element to selectively direct current through the or each energy storage device and a primary passive current check element to limit current flow through the rationalised module to a single direction, the current flow control elements and the or each energy storage device in each rationalised module combining to selectively provide a voltage source to control the configuration of an AC voltage at the AC terminal; and
a controller to selectively control the switching of the current flow control elements in the or each rationalised module of each chain-link converter to simultaneously switch both limb portions into circuit to form a current circulation path including the converter limb and the DC electrical network.

2. A power electronic converter according to Claim 1 wherein a circulation current flowing in the current circulation path includes a DC current component to transfer energy from at least one rationalised module to the DC electrical network.

3. A power electronic converter according to Claim 1 or Claim 2 wherein a circulation current flowing in the current circulation path includes an AC current component.

4. A power electronic converter according to Claim 3 wherein the AC current component is shaped to minimise or cancel a ripple current in the DC electrical network.

5. A power electronic converter according to any preceding claim wherein each limb portion further includes an inductor connected in series with the chain-link converter, and the controller selectively controls the switching of the current flow control elements in the or each rationalised module of each chain-link converter to provide a voltage across the corresponding inductor to actively control the current in the respective limb portion.

6. A power electronic converter, for connecting AC and DC electrical networks and transferring power therebetween, comprising:
first and second DC terminals for connection to a DC electrical network;
a converter limb extending between the first and second DC terminals and having first and second limb portions separated by an AC terminal for connection to an AC electrical network, each limb portion including a chain-link converter, each chain-link converter including at least one rationalised module, each rationalised module having first and second sets of series-connected current flow control elements connected in parallel with at least one energy storage device, each set of current flow control elements including a primary active switching element to selectively direct current through the or each energy storage device and a primary passive current check element to limit current flow through the rationalised module to a single direction, the current flow control elements and the or each energy storage device in each rationalised module combining to selectively provide a voltage source to control the configuration of an AC voltage at the AC terminal; and
a controller to selectively control the switching of the current flow control elements in the or each rationalised module of each chain-link converter such that each chain-link converter controls the configuration of the AC voltage at the AC terminal in a voltage range extending between a negative value and a positive value,
wherein each chain-link converter is rated so that the current flow control elements in the or each rationalised module of each chain-link converter are switchable to provide a voltage across the respective limb portion exceeding a DC voltage at the corresponding DC terminal.

7. A power electronic converter according to Claim 6 wherein the controller selectively controls the switching of the current flow control elements in the or each rationalised module of each chain-link converter to generate a leading or lagging AC current at the AC terminal.

8. A power electronic converter according to any preceding claim wherein the first and second sets of series-connected current flow control elements are connected in parallel with an energy storage device in a full-bridge arrangement to form a 2-quadrant bipolar module that can provide negative, zero or positive voltage while conducting current in a single direction.

9. A power electronic converter according to any preceding claim wherein each limb portion further includes a director switch, the director switch including at least one secondary passive current check element to limit current flow through the limb portion to a single direction between the corresponding AC and DC terminals, the or each secondary passive current check element in each limb portion being connected in series with the or each corresponding rationalised module.

10. A power electronic converter according to any preceding claim wherein each limb portion further includes a director switch, the director switch including at least one secondary active switching element to selectively switch the corresponding limb portion into and out of circuit between the corresponding AC and DC terminals, the or each secondary active switching element in each limb portion being connected in series with the or each corresponding rationalised module.

11. A power electronic converter according to Claim 9 or Claim 10 wherein each director switch supports part of a differential voltage appearing across the corresponding limb portion when that limb portion is in a non-conducting state.

12. A power electronic converter according to any preceding claim wherein the controller selectively controls the switching of the current flow control elements of at least one rationalised module in at least one of the chain-link converters to provide a voltage which opposes a flow of current created by a fault occurring, in use, in the DC electrical network.

13. An AC to AC converter assembly comprising
a rectifier comprising:
first and second DC terminals;
a converter limb extending between the first and second DC terminals and having first and second limb portions separated by an AC terminal for connection to an AC electrical network, each limb portion including a chain-link converter, each chain-link converter including at least one rationalised module, each rationalised module having first and second sets of series-connected current flow control elements connected in parallel with at least one energy storage device, each set of current flow control elements including a primary active switching element to selectively direct current through the or each energy storage device and a primary passive current check element to limit current flow through the rationalised module to a single direction, the current flow control elements and the or each energy storage device in each rationalised module combining to selectively provide a voltage source to control the configuration of an AC voltage at the AC terminal; and
an inverter comprising:
first and second DC terminals; and
a converter limb extending between the first and second DC terminals and having first and second limb portions separated by an AC terminal for connection to an AC electrical network, each limb portion including a chain-link converter, each chain-link converter including at least one rationalised module, each rationalised module having first and second sets of series-connected current flow control elements connected in parallel with at least one energy storage device, each set of current flow control elements including a primary active switching element to selectively direct current through the or each energy storage device and a primary passive current check element to limit current flow through the rationalised module to a single direction, the current flow control elements and the or each energy storage device in each rationalised module combining to selectively provide a voltage source to control the configuration of an AC voltage at the AC terminal,
wherein the first DC terminals of the rectifier and inverter are interconnected via a first link, and the second DC terminals of the rectifier and inverter are interconnected via a second link.

14. An AC to AC converter assembly according to Claim 13 wherein the rectifier is a power electronic converter according to any of Claims 1 to 12.

15. An AC to AC converter assembly according to Claim 13 or Claim 14 wherein the inverter is a power electronic converter according to any of Claims 1 to 12.
